# EUROPEAN PATENT SPECIFICATION

(11) **EP 0 663 654 B1**
(45) Date of publication and mention of the grant of the patent: **03.09.1997**
(21) Application number: 93850218.4
(22) Date of filing: 16.11.1993
(51) Int. Cl.: G07F 7/00, G07G 1/00, G06F 17/60

(54) **A method in distributing products from suppliers to customers**
Verfahren zur Verteilung von Produkten von Lieferanten an Kunden
Méthode pour la distribution de produits des fournisseurs vers les clients

(43) Date of publication of application: 19.07.1995
(73) Proprietor: OPV System i Kalmar Aktiebolag, 392 31 Kalmar (SE)
(72) Inventor: Calmius, Christer, S-386 33 Färjestaden (SE)
(74) Representative: Ström, Tore

(56) References cited:
- EP-A- 0 037 649
- EP-A- 0 446 500
- WO-A-90/11572
- FR-A- 2 324 058
- GB-A- 2 077 659
- GB-A- 2 202 664
- US-A- 4 654 482
- US-A- 4 984 155
- US-A- 4 992 940
- US-E- R E25 600
- ICL TECHNICAL JOURNAL, vol.6, no.3, May 1989, HITCHIN, GB, pages 511 - 541; VAL JONES: 'A Formally Specified In-Store System for the Retail Sector.'

## Description

The present invention relates to a method in distributing products from suppliers to retail shops for sale to customers, and more particularly in distributing products to retail shops from wholesalers and producers either directly to the retail shops or via a main distributor and order center, the products being exposed to the customers in the retail shops which are operated as self-service shops, which means that information of the price of a product has to be available at the place where the product is exposed.

It has been customary to mark each package of a product individually with the price but this is a time consuming and expensive procedure. Therefore, the retail shops are abolishing this system and instead provide information of the price at the place where the product is exposed; usually such information is provided by attaching a label with the price on the edge of the shelf on which the product is exposed. This system has been approved by the authorities for consumer policies and is rapidly gaining ground in the retail shops.

The object of the invention is to provide a method of the kind referred to above which greatly facilitates ordering, distribution and price marking of the products in retail shops connected to a main distributor and order center, and which allows the individual retailer to determine easily the sales price of each product, which is in accordance with regulations prohibiting the supplier to determine the sales price for the consumer. A further object of the invention is to obtain an improved assortment system and improved exposure of the products, which means that a more economic follow-up and improved providability can be obtained.

The method of the invention has obtained the characterizing features of claim 1 in order to achieve said objects.

The method will be described in more detail below with reference to the accompanying drawings, in which
FIG. 1 is a flow chart illustrating the ordering and delivery system of the method of the invention,
FIG. 2 is a view of a picture label to be mounted at the place where the related product is exposed in the retail shop, and
FIG. 3 is a register sheet to be used by the retailer in order to keep record of the assortment available in the retail shop.

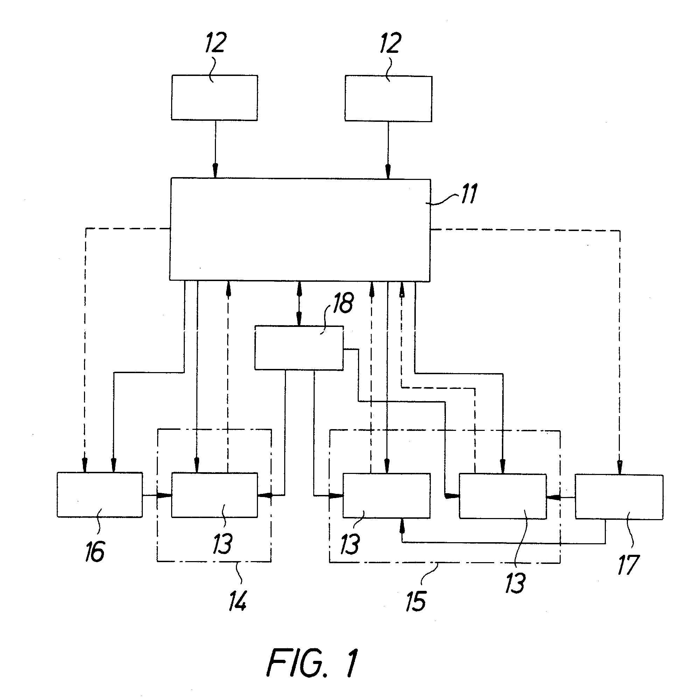

Referring to FIG. 1 a block 11 represents a main distributor and order center for retail shops e.g. an organization of the type that is represented by the Swedish central furnishing organization for dealers of everyday commodities, ICA. Distributor 11 keeps a supply of products that are delivered to the distributor by several individual producers or wholesalers 12. The producers can be e.g. meat packing plants, dairies, or manufacturers of chemical products, paper products etc and the wholesalers can be e.g. importers of fruit and colonial products. Distributor 11 obtains products from the producers and wholesalers and delivers the products on order to retailers 13 which may be located in different geographical areas 14 and 15 of the country. There are also producers or wholesalers 16 and 17 which do not deliver to distributor 11. They may have a local connection to one or more specific areas and deliver directly to the retailers in said areas. Thus, it is shown that producer or wholesaler 16 has connection to area 14 and producer or wholesaler 17 has connection to area 15. The solid lines and arrows indicate the flow of goods, and the dash lines and arrows indicate the orders given for goods to be delivered. It will be seen that retailers 13 order all products from distributor 11 and that producers or wholesalers 12 deliver the goods to the distributor who in turn delivers the goods to retailers 13, and that products from producers or wholesalers 16 and 17 are ordered also from distributor 11 who in turn induces producers and wholesalers 16 and 17 to deliver directly said products to retailer 13 in area 14 and retailers 13 in area 15, respectively. In order to facilitate ordering of products distributor 11 accords to each product an order number which is used when ordering and delivering the products. Each producer or wholesaler accords to each product supplied an EAN code of international standard, identifying the product, which is applied to (printed on) the package of the product as an EAN bar code.

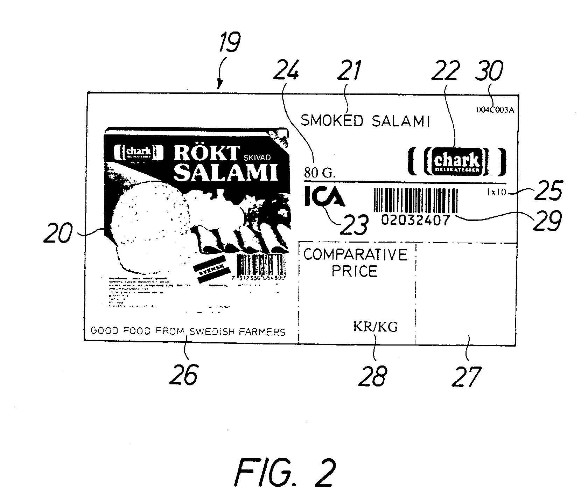

A printing office 18 is established as an integral part of distributor 11 or as an independent organization. Printing office 18 produces individualized labels for all products that are available from distributor 11 and producers or wholesalers 16 and 17 and a label 19 for a specific product is shown in FIG. 2.

Label 19 has a picture 20 of the product concerned and/or the package of said product, e.g. as shown in FIG. 2 a picture of a package of smoked salami, and is produced by multi colour printing preferably in a computer and multi colour laser printer system wherein the picture is processed in digitalized state.

The name of the product is printed at 21 and the logotype of the producer is printed at 22. The label also shows the logotype of distributor 11 at 23, the weight of the package at 24 and the number of packages in each container at 25. There is also a space 26 for a slogan or the like as well as a field 27 where the sales price of the package can be written in the retail shop, and a field 28 wherein the comparative price can be written, also in the retail shop. The order number is indicated at 29 by arabic figures as well as a bar code and, finally, there is printed a number at 30 which identifies the specific label. The label is enclosed in a plastic cover which allows the sales and comparative prices to be written thereon by means of a felt-tip pen or the like.

The labels are collected by the printing office in boxes which are delivered by the printing office to the retail shops. The boxes are given a number identifying the content of labels in the box such content being different for different boxes depending on the geographic area in the country that the box is intended for. For example a box that is intended for area 14, FIG. 1, includes labels for all products delivered by distributor 11 and labels for all products delivered by producer or wholesaler 16, and a box intended for area 15 includes labels for all products delivered by distributor 11 and labels for all products delivered by producer or wholesaler 17.

Exceptionally, labels for products delivered by producers or wholesalers 16 and 17 may be delivered to said wholesalers or producers who pass on the labels to the retailers.

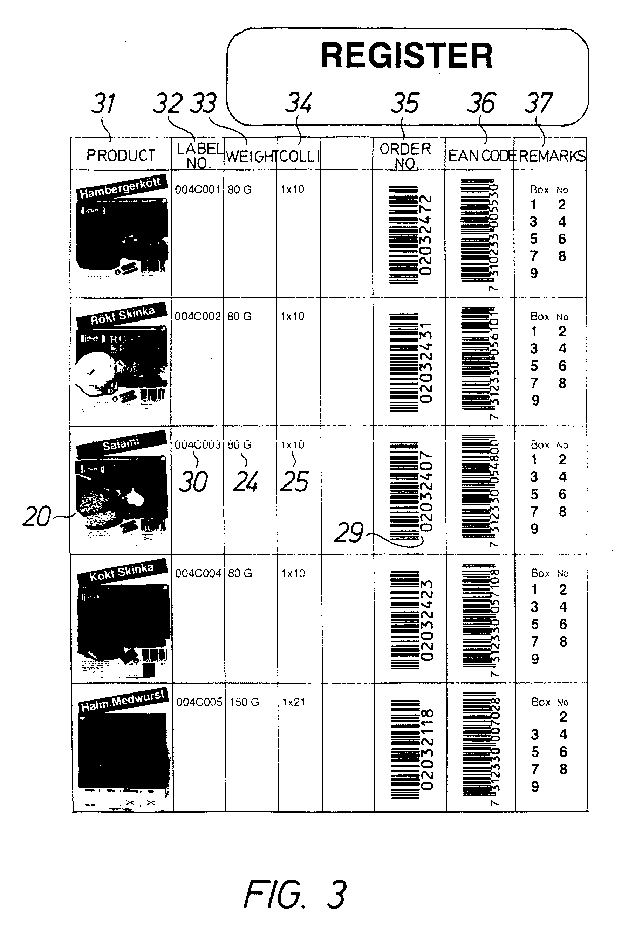

Printing office 18 also delivers to each retail shop register sheets of the type disclosed in FIG. 3. Such a sheet includes a column 31 which contains pictures of the products available in the area concerned and/or the packages for such products, and picture 20 of label 19 is found in this column. A column 32 of the register includes the label number, and label number 30 of the label in FIG. 2 is found in this column. A column 33 contains the weight of the package, and information 24 of label 19 is found in this column. A column 34 mentions the number of packages in each colli, and information 25 of label 19 is found in this column. A column 35 includes the order number for the related product and, again, the order number at 29 on label 19 is found in this column. A column 36 contains the international EAN code for the related product, and this code is printed also on each package of the product. Finally, a column 37 labelled "REMARKS" contains box numbers and in this column numbers of the boxes which shall contain the related product are mentioned.

Labels 19 are mounted by the retailer at the spaces reserved for the respective products in the retailer's shop. In case the labels have been delivered to a producer or wholesaler 16 or 17 the mounting of the label may be effected by the producer or wholesaler himself.

When the retailer is to order products for his retail shop he may use the order numbers on labels 19 which are found at different places in his retail shop by reading the order number bar code at those places by means of an IR scanner. The number of collis that he wishes to order of the related product is added by means of a keyboard on the reader, and the order number and the number of collis are stored in the reader. The same procedure can be performed by reading the order number bar code in column 35 of the register, FIG. 3. The information stored in the reader is forwarded online to distributor 11 who effects the delivery of the goods ordered either directly from the distributor's store or from the independent suppliers 16 and 17. In the retail shop, operated as a self-service shop, the EAN codes for the several products available in the retail shop are stored in a cash register computer together with the sales price of the product, which is determined by the retailer and is supplied to the computer manually over a keyboard. The delivered products are placed in the spaces reserved for the respective products in the retail shop, with the sales price of the product written by the retailer in field 27 as well as the comparative price written in field 28. No price labels are attached to the packages but each product or package is provided with the EAN bar code identifying the product.

A customer that wants to buy a package takes this package from the space where it is exposed and brings it to the shop cashier who reads the EAN bar code on the product or package by means of an IR scanner connected to the cash register computer. The sales price of the product identified by means of the EAN code as well as the name of the product is printed by the cash register on the sales slip handed over to the customer.

The retailer accordingly is not bound to a sales price that has been fixed by the distributor or another supplier. On the contrary he can easily determine the price individually and according to his own calculation by adding a suitable overhead to the price which he pays for the product to distributor 11. It is also possible for the retailer to include in the cash register computer a different price to be applied during a specific period, a so called campaign price, said period being controlled by the cash register computer; no re-pricing of the products on the shelves is then necessary.

As will be understood from the illustrative embodiment of the method of the invention described above the retailer's ordering of products as well as pricing of the products will be greatly facilitated by the invention. It will be easier for the retailer to keep a unitary assortment of products at all times. The advantages achieved by the method of the invention would make the operation of the retail shop more easily controlled and more profitable, which may lead to lower sales prices to the benefit of the customers.

## Claims

1. A method in distributing products from suppliers to retail shops for sale to customers, wherein each retailer is provided with information about available products with a number associated with each article to be used in ordering products from a distributor, ordered products being delivered to the retailer and being stored in the retailer's shop with the product or the package thereof provided with the EAN bar code identifying the product, and wherein the EAN bar code for each product available in the retailer's shop is stored in a cash register in the retailer's shop together with the associated sales price of the product, the EAN bar code being read when the product is to be delivered and sold to a customer, to produce a sales slip for the customer showing the sales price of the product, **characterized** in that said information about products available from the distributor or from producers or wholesalers is provided individually for each retailer as printed matter in the form of register sheets and a number of separate labels, each label being individualized for one product, and having the order number for the products or the associated product, respectively, printed thereon as a bar code, that said printed matter is distributed to the retailers, and that said labels are mounted in the retailer's shop where the product is available to the customer, the sales price of each product added by the retailer being indicated on the associated label but not on the individual product or the package thereof, the order number bar codes on said register sheets or the order number bar code on individual labels being read in ordering products from the distributor.

2. The method as in claim 1 wherein the labels are delivered to each retailer in a box containing labels for such products as are distributed by the distributor and/or the producers or wholesalers to the geographic area where the retailer's shop is located.

3. The method as in claim 1 or 2 wherein the order number bar code of a product to be ordered is read from the register sheets or the label by means of a scanner and wherein the order number is stored in a memory associated with the scanner, together with the quantity to be ordered, information of said quantity being supplied to the memory manually over a keyboard.

4. The method as in claim 3 wherein the information stored in the memory is forwarded online to the distributor.

5. The method as in claim 1 wherein there is included in the register sheets and the labels for each product a picture of the product and/or the package thereof.

6. The method as in claim 1 wherein the register sheets and the labels are distributed to the retailers from a printing office.

## Patentansprüche

1. Ein Verfahren zum Verteilen von Produkten von Lieferanten an Einzelhandelsläden zum Verkauf an Kunden, wobei jeder Einzelhändler mit Information über erhältliche Produkte mit einer einem jeden Artikel zugeordneten Nummer versehen wird, welche beim Bestellen von Produkten bei einem Verteiler zu verwenden ist, wobei die bestellten Produkte an den Einzelhändler geliefert werden und in dem Laden des Einzelhändlers gelagert werden, wobei das Produkt oder dessen Verpackung mit einem EAN-Strichcode versehen werden, der das Produkt identifiziert, wobei der EAN-Strichcode für jedes in dem Laden des Einzelhändlers erhältliche Produkt in einer Registrierkasse in dem Laden des Einzelhändlers zusammen mit dem zugeordneten Verkaufspreis des Produkts gespeichert wird und wobei der EAN-Strichcode gelesen wird, wenn das Produkt an einen Kunden zu liefern und zu verkaufen ist, um einen den Verkaufspreis des Produkts zeigenden Verkaufszettel für den Kunden zu erzeugen, **dadurch gekennzeichnet**, daß die Information über Produkte, die von dem Verteiler oder von Herstellern oder von Großhändlern erhältlich sind, für jeden Einzelhändler individuell als Drucksachen in der Form von Registerblättern und einer Anzahl von separaten Etiketten bereitgestellt wird, wobei jedes Etikett für ein Produkt individualisiert ist und die Bestellnummer für die Produkte oder für das zugeordnete Produkt aufweist, welche hierauf als ein Strichcode gedruckt ist, daß die Drucksachen an die Einzelhändler verteilt werden und daß die Etiketten in dem Laden des Einzelhändlers angebracht werden, in welchem das Produkt für den Kunden erhältlich ist, wobei der Verkaufspreis eines jeden Produkts, der durch den Einzelhändler hinzugefügt wird, auf dem zugeordneten Etikett, jedoch nicht an dem einzelnen Produkt oder an dessen Verpackung angegeben wird und wobei die Bestellnummer-Strichcodes auf den Registerblättern oder der Bestellnummer-Strichcode auf den einzelnen Etiketten beim Bestellen von Produkten bei dem Verteiler gelesen werden.

2. Das Verfahren nach Anspruch 1, bei welchem die Etiketten an jeden Einzelhändler in einem Behälter geliefert werden, der Etiketten für solche Produkte enthält, wie diese durch den Verteiler und/oder die Hersteller oder Großhändler in dem geographischen Bereich verteilt werden, in welchem sich der Laden des Einzelhändlers befindet.

3. Das Verfahren nach Anspruch 1 oder 2, bei welchem der Bestellnummer-Strichcode eines Produkts, das zu bestellen ist, mit Hilfe eines Scanners von den Registerblättern oder dem Etikett gelesen wird und die Bestellnummer in einem Speicher, der mit dem Scanner verbunden ist, zusammen mit der zu bestellenden Menge gespeichert wird, wobei die Information über die Menge manuell über eine Tastatur an den Speicher geliefert wird.

4. Das Verfahren nach Anspruch 3, bei welchem die in dem Speicher gespeicherte Information an den Verteiler on-line übermittelt wird.

5. Das Verfahren nach Anspruch 1, bei welchem auf den Registerblättern und den Etiketten für jedes Produkt ein Bild des Produktes und/oder dessen Verpackung hinzugefügt wird.

6. Das Verfahren nach Anspruch 1, bei welchem die Registerblätter und die Etiketten an die Einzelhändler von einer Druckerei verteilt werden.

## Revendications

1. Procédé de distribution de produits, des fournisseurs aux magasins de détail en vue d'une vente aux consommateurs, dans lequel chaque détaillant reçoit des informations sur les produits disponibles, un numéro associé à chaque article devant être utilisé pour commander des produits à un distributeur, les produits commandés étant livrés au détaillant et étant stockés dans le magasin du détaillant, le produit ou l'emballage de celui-ci étant pourvu d'un code-barre EAN identifiant le produit, et dans lequel le code-barre EAN de chaque produit disponible dans le magasin du détaillant est enregistré dans une caisse enregistreuse dans le magasin du détaillant, en même temps que le prix de vente associé du produit, le code-barre EAN étant lu lorsque le produit est livré et vendu à un client, de manière à établir un ticket de caisse pour le client, montrant le prix de vente du produit,
caractérisé en ce que lesdites informations sur les produits disponibles auprès du distributeur ou auprès de producteurs ou grossistes sont fournies individuellement pour chaque détaillant en tant qu'imprimés se présentant sous forme de fiches de registre et d'un nombre d'étiquettes séparées, chaque étiquette étant réalisée individuellement pour un produit, et comportant le numéro de commande des produits ou du produit associé(s), imprimé sur l'étiquette sous forme d'un code-barre, en ce que lesdits imprimés sont distribués aux détaillants, et en ce que lesdites étiquettes sont installées dans le magasin du détaillant à l'endroit où le produit est mis à la disposition du client, le prix de vente de chaque produit, ajouté par le détaillant, étant indiqué sur l'étiquette associée, mais non sur le produit individuel ou l'emballage de celui-ci, les codes-barres du numéro de commande inscrits sur lesdites fiches de registre ou le code-barre du numéro de commande sur chaque étiquette individuelle étant lus lors de la commande des produits auprès du distributeur.

2. Procédé selon la revendication 1, dans lequel les étiquettes sont livrées à chaque détaillant dans une boîte contenant les étiquettes des produits qui sont distribués par le distributeur et/ou par les producteurs ou grossistes dans la zone géographique, dans laquelle se trouve le magasin du détaillant.

3. Procédé selon la revendication 1 ou 2, dans lequel le code-barre du numéro de commande d'un produit à commander est lu sur les fiches de registre ou sur l'étiquette au moyen d'un lecteur, et dans lequel le numéro de commande est enregistré dans une mémoire associée au lecteur, en même temps que la quantité à commander, les informations sur ladite quantité étant entrées manuellement dans la mémoire, via un clavier.

4. Procédé selon la revendication 3, dans lequel les informations enregistrées dans la mémoire sont transmises en ligne au distributeur.

5. Procédé selon la revendication 1, dans lequel est inclus, dans les fiches de registre et les étiquettes, pour chaque produit, une image du produit et/ou de l'emballage.

6. Procédé selon la revendication 1, dans lequel les fiches de registre et les étiquettes sont distribuées aux détaillants depuis un bureau d'impression.
